# FASCICULE DE BREVET EUROPEEN

(11) **EP 2 984 639 B1**
(45) Date de publication et mention de la délivrance du brevet: **31.10.2018**
(21) Numéro de dépôt: 14717709.1
(22) Date de dépôt: 04.04.2014
(51) Int. Cl.: G08B 13/196, G06T 7/20

(54) **DISPOSITIF ET PROCEDE DE SUIVI 3D VIDEO D'OBJETS D'INTERÊT**
VORRICHTUNG UND VERFAHREN ZUR 3D-VIDEOÜBERWACHUNG BESTIMMTER OBJEKTE
DEVICE AND METHOD FOR THE 3D VIDEO MONITORING OF OBJECTS OF INTEREST

(30) Priorité: 11.04.2013 FR 1353280
(43) Date de publication de la demande: 17.02.2016
(73) Titulaire: Commissariat à l'Énergie Atomique et aux Énergies Alternatives, 75015 Paris (FR)
(72) Inventeur: DHOME, Yoann, F-91191 Gif-sur-Yvette Cedex (FR); SAYD, Patrick, F-91191 Gif-sur-Yvette Cedex (FR)
(74) Mandataire: Lopez, Frédérique
(86) Numéro de dépôt international: PCT/EP2014/056781
(87) Numéro de publication internationale: WO 2014/166823

(56) Documents cités:
- EP-A1- 1 927 947
- KR-A- 20110 109 596
- JOSEPHINE SULLIVAN ET AL: "Tracking and Labelling of Interacting Multiple Targets", 1 janvier 2006 (2006-01-01), COMPUTER VISION - ECCV 2006 LECTURE NOTES IN COMPUTER SCIENCE;;LNCS, SPRINGER, BERLIN, DE, PAGE(S) 619 - 632, XP019036522, ISBN: 978-3-540-33836-9 abrégé figures 2,3,5 page 1, ligne 13,14 page 2, ligne 5,6 page 3, ligne 6,7 page 4, ligne 7-9 page 5, ligne 1,2,16-20 page 6, ligne 6-8

## Description

### Domaine de l'invention

L'invention concerne le domaine des systèmes de sécurité et adresse plus particulièrement les systèmes de suivi 3D vidéo d'objets d'intérêt, les objets d'intérêt pouvant notamment être des personnes ou des véhicules.

### Etat de la Technique

Le développement de systèmes d'assistance à la sécurité essaie de répondre au besoin de sécuriser de nombreuses infrastructures critiques à l'aide d'espaces de contrôles ponctuels. Pour optimiser ces systèmes, les études actuelles favorisent la multiplication des détecteurs permettant de couvrir un large éventail de substances ou d'éléments dangereux. Or la sensibilité et la spécificité des détecteurs rendent nécessaire l'agrégation de leurs alarmes pour disposer d'éléments d'analyse robuste et fiable. Le document EP1927947 décrit la liaison d'une suite d'événements consécutifs à un groupe de capteurs voisins dans le but de corréler les événements qui sont détecté par un ensemble important de capteurs avec des images qui sont obtenues d'un faible nombre de caméras. Dans ce cadre, de nombreux systèmes d'assistance à la sécurité intègrent un module de suivi 3D vidéo de personnes leur permettant de fusionner d'éventuelles alarmes correspondant à une même personne. Le module de suivi permet de pister chaque personne présente dans la zone sécurisée, et permet donc d'associer chaque alarme issue d'un capteur avec une personne suivie. Ainsi il est possible d'agréger plusieurs détections à une même personne au cours du temps et de renforcer l'hypothèse d'un danger jusqu'à une probabilité suffisante pour prévenir un opérateur de sécurité.

Cependant les modules de suivi de personnes offrent une fiabilité limitée et peuvent assez facilement confondre deux personnes lorsque celles-ci interagissent, se croisant, marchant à proximité, se faisant face quelques temps.

Pour palier à ce problème, il existe à ce jour, deux approches connues.

La première approche consiste à faire en sorte que les personnes présentes dans la zone sécurisée par le système de contrôle restent bien séparées afin d'éviter les situations d'interactions ou les potentielles erreurs pour les modules de suivi. Ainsi, le brevet EP 2 204 783 A1 de Thales propose un système de sécurité où une seule personne doit passer à travers un corridor de sécurité. Cette solution est viable dans un contexte très contraint, ce qui est de moins en moins accepté par les exploitants.

La seconde approche consiste à réaliser des analyses probabilistes de long terme basées sur différents critères d'apparences et/ou de morphologies, pour tenter de reconnaitre les différentes personnes ayant interagies une fois séparées. Plusieurs algorithmes connus permettent de gérer des hypothèses multiples, afin de ne pas prendre de décision immédiate pour associer les détections de personnes à une piste, une piste étant associée à une suite de position de personnes dans l'espace et le temps, puis attendre de disposer de suffisamment d'éléments pour confirmer ou infirmer les appariements entre pistes et détections. Ainsi, l'article de B. Song et A. K. Roy-Chowdhury intitulé "Stochastic Adaptive Tracking In A Camera Network*",* ou l'article de R. Y. Khalaf et S. S. Intille intitulé "Improving multiple people tracking using temporal consistency*"* proposent des variantes autour de ce principe. L'inconvénient de cette approche dite « analyste probabiliste » est qu'elle intègre de l'incertitude et du doute. Elle n'intègre donc pas les contraintes spécifiques des systèmes de sécurité en termes de fiabilité.

Or la fiabilité d'un système de sécurité suppose que ce dernier doit avoir un taux de non-détection de danger quasi-nulle.

Ainsi, les solutions existantes ne répondent pas à la problématique récente posée par les nouveaux systèmes d'assistance à la sécurité. Ces systèmes pour répondre aux exigences récentes de sécurisation des infrastructures critiques ne peuvent imposer la contrainte d'une parfaite séparabilité des personnes dans les zones sécurisées, à la fois pour des contraintes matérielles (avec le besoin de nombreux opérateurs pour contrôler la circulation ou de barrières physiques) que pour des contraintes d'exploitabilités de ces systèmes.

Il existe alors le besoin d'une solution qui pallie aux inconvénients des solutions connues.

La présente invention répond à ce besoin.

### Résumé de l'invention

Un objet de la présente invention est de proposer un système d'assistance à la sécurité qui comprenne un module de suivi 3D vidéo d'objets robuste et fiable.

Un autre objet de la présente invention est de fournir un dispositif de propagation de risques qui permette que les risques potentiels associés à une personne ne soient pas perdus ou associés à une autre personne au cours du temps.

Le module de propagation de risque proposé permet de créer des liens de parenté entre les pistes analysées, lors d'interactions ou lors de disparition/réapparition de pistes. Il permet ainsi de diffuser les risques les plus élevées à chaque piste concernée.

Un autre objet de la présente invention est de proposer un procédé simple et fiable d'utilisation en temps réel. La méthode de l'invention permet de renforcer la fiabilité d'un système d'agrégation d'alarmes issues de différents capteurs et permet de limiter les non-détections des systèmes d'assistance à la sécurité.

Un autre avantage tient dans la prise en compte par le module des limites des algorithmes de suivi d'objets dans le cadre d'un système de sécurité aux contraintes spécifiques. La prise en compte de ces contraintes spécifiques, autorise un taux de non-détection de danger quasi-nulle.

Avantageusement, le dispositif de l'invention se base sur une nouvelle interprétation du besoin en termes de suivi 3D vidéo d'objets d'intérêt dans le cadre d'un système de sécurisation d'infrastructure critique, contrairement aux solutions existantes qui sont concentrées sur l'amélioration de l'algorithme de suivi, en complexifiant fortement les calculs, ou en retardant la prise de décision pour disposer de plus d'informations, mais ce au prix d'une difficulté à tenir la contrainte de temps réel issu de la fusion des données.

Avantageusement, le procédé de l'invention détecte les situations potentiellement délicates, c'est-à-dire des interactions (personnes se croisant, marchant à proximité, se faisant face quelques temps) ou des disparitions/réapparitions de pistes. Pour détecter ces situations, le procédé proposé évalue en permanence la proximité entre les différentes pistes ainsi que leurs capacités à s'occulter du point de vue des caméras pour un algorithme de suivi, puis le procédé permet de diffuser à toutes les pistes concernées le risque le plus élevé possédé par l'une d'entre elles.

Toujours avantageusement, le procédé de l'invention permet de créer une parenté entre pistes ayant interagies et donc susceptibles d'avoir été confondues par l'algorithme de suivi de personnes, créant ainsi une information correspondant mieux aux besoins des systèmes de supervision.

La méthode de l'invention offre de plus la possibilité d'utiliser différents critères pour déterminer une interaction entre pistes.

Le système de propagation de risque proposé couvre le champ des systèmes d'assistance à la sécurité incluant un système vidéo et plus globalement le domaine de la vidéosurveillance. Il peut être utilisé en liaison avec tout système de fusion d'informations destinées à la sécurité, incluant une étape de suivi 3D vidéo de personnes.

Avantageusement, la présente invention propose un procédé d'assistance à la sécurité dans le suivi 3D d'objets d'intérêt, le procédé comprenant les étapes de :
- calibrer par rapport à une référence commune un ensemble de détecteurs d'un système de suivi pour un espace à surveiller;
- définir pour l'espace surveillé, au moins une zone de compétence ;

- générer pour la zone de compétence une liste de pistes, chaque piste comprenant pour un objet d'intérêt suivi un label identifiant l'objet d'intérêt suivi et une suite de positions fournies par les détecteurs ;
- détecter des interactions entre les pistes sur la zone de compétence ; et
- créer un label de parenté à partir des labels identifiant chaque objet d'intérêt suivi pour les pistes détectées en interaction.

Avantageusement, la zone de compétence est associée à une zone d'entrée-sortie de l'espace surveillé et à une ou plusieurs zones de recouvrement.

Avantageusement, le procédé permet de définir des interactions entre pistes, par un paramètre de proximité, ou par un paramètre d'occultation.

Dans une implémentation particulière, l'étape de détection d'interactions consiste à déterminer la présence répétée d'une piste dans l'ellipse de projection au sol d'une autre piste et l'occultation répétée entre ces mêmes pistes.

Avantageusement, les détecteurs sont du type capteur radiométrique, détecteur métallique, détecteur de trace d'explosif, détecteur biologique et/ou détecteur épidémiologique.

Dans un mode opératoire, l'étape de création de label de parenté comprend les étapes de :
- supprimer de la liste des pistes, les deux pistes de l'interaction détectée entre deux objets d'intérêt;
- créer une nouvelle piste commune pour le suivi des deux objets d'intérêt en interaction; et
- associer un label d'interaction à la piste commune, le label d'interaction représentant les deux pistes supprimées dans la généalogie de la piste commune.

L'étape de création de label de parenté comprend de plus les étapes de :
- créer à partir de la piste commune, deux nouvelles pistes individuelles pour suivre chacun des deux objets d'intérêt ;
- supprimer la piste commune ; et
- incorporer le label de la piste commune supprimée dans la généalogie de chacune des deux pistes individuelles, les positions des deux objets d'intérêt identifiées par le système de suivi étant associées aux labels résultants.

Le procédé de la présente invention opère pour un dispositif d'assistance à la sécurité dans le suivi d'objets d'intérêt, le dispositif comprenant des moyens pour mettre en oeuvre les étapes du procédé.

Avantageusement, les étapes du procédé peuvent être implémentées sous forme d'un programme d'ordinateur comprenant des instructions de code pour effectuer tout ou partie des étapes du procédé.

### Description des figures

Différents aspects et avantages de l'invention vont apparaitre en appui de la description d'un mode préféré d'implémentation de l'invention mais non limitatif, avec référence aux figures ci-dessous :
La figure 1 illustre de manière schématique un système d'assistance à la sécurité permettant d'implémenter avantageusement le dispositif de l'invention ;
La Figure 2 est une illustration d'une cartographie d'une zone à surveiller ;
La Figure 3 montre les étapes du processus de propagation des risques selon le principe de l'invention;
La Figure 4 est une illustration du processus de création de liens de parenté.

### Description détaillée de l'invention

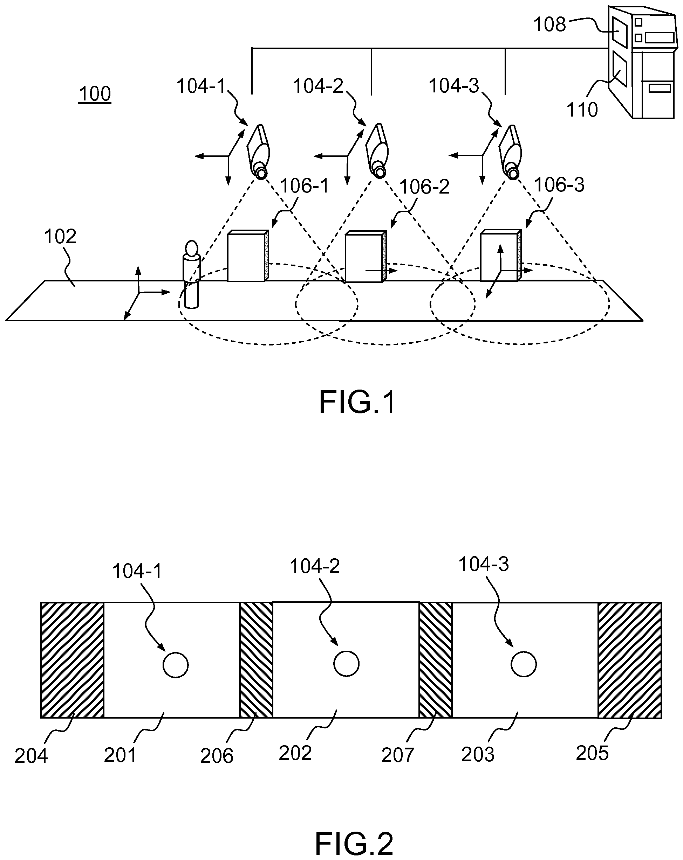

La figure 1 illustre un système connu d'assistance à la sécurité dans lequel implémenter avantageusement le dispositif de l'invention. Seuls les principaux éléments d'un tel système sont illustrés, mais l'homme de l'art appréciera que toute variante de ces éléments ne change pas le principe fonctionnel de l'invention. Ainsi pour des raisons de clarté de la description, l'architecture montrée est composée d'un nombre limité de caméras et de capteurs. Dans l'exemple décrit, trois caméras (104-1, 104-2, 104-3) et trois capteurs chimiques (106-1, 106-2, 106-3) sont placés le long d'un corridor (102) où peuvent circuler des personnes. Il est à noter que le nombre tant de capteurs que de caméras peut être différent selon le besoin du système de surveillance, sans aucune incidence sur le fonctionnement du dispositif de l'invention, de même que la géométrie, la taille du corridor.

Le positionnement des caméras présenté dans la figure 1 illustre un cas particulier et non limitatif, les caméras pouvant être positionnées différemment. Par exemple, au lieu d'exploiter un point de vue « vu du ciel », il est possible de placer les caméras de telle sorte à obtenir un point de vue exploitant la perspective suivant la longueur du corridor ou au contraire suivant la largeur de celui-ci. De même, il est possible d'utiliser des caméras avec des objectifs très différents allant du « fish-eye » (focale très courte) à des objectifs appelés « pin-hole » (focale plus longue).

De même, le système de l'invention peut opérer avec tout type de détecteurs de sécurité, tels que capteur radiométrique, détecteur métallique, ou encore détecteur de trace d'explosif, détecteur biologique ou bien encore détecteur épidémiologique.

Le système de surveillance comprend de plus un module (108) de traitement des données issues des capteurs et caméras. Le module de traitement de données (108) comprend un algorithme de suivi de personnes. L'algorithme de suivi délivre une liste de pistes associant une suite de positions des objets ou personnes suivis dans l'espace et le temps ainsi qu'éventuellement un volume représentant l'objet suivi.

Un dispositif de propagation de risques (110), objet de la présente invention, est couplé au système d'assistance, et plus particulièrement au module de traitement de données (108).

Le dispositif opère à partir de plusieurs types de données :
- des données de calibrage ;
- des données de cartographie ; et
- des règles de définition d'interaction entre pistes.

L'ensemble du système de capteurs et de caméras est calibré afin que chaque élément soit positionné dans l'espace par rapport à une référence commune. Le calibrage permet de projeter dans un même espace commun, le corridor dans l'exemple décrit, la zone observée par les caméras et surveillée. Le calibrage permet de connaitre la position dans le corridor de tous les objets (personnes, caméras, capteurs) par rapport à une référence commune (l'entrée du corridor par exemple). Le calibrage permet ainsi de faire le lien entre les champs de vues des caméras pour faciliter l'interprétation des images.

Ainsi, sur l'exemple de la figure 1, un individu quittant par la droite le champ de vue (CV1) de la première caméra (104-1), apparaitra par la gauche dans le champ de vue (CV2) de la deuxième caméra (104-2). Avantageusement, l'algorithme de suivi de personnes inter-caméras prend en compte cette hypothèse pour optimiser ses performances.

De manière similaire, une détection issue du premier capteur (106-1) peut être mise en relation avec une piste issue du suivi réalisé à partir des images de la première caméra (104-1).

Avantageusement, les données de calibrage permettent également de réaliser un suivi de personnes en 3D en modélisant les personnes par des cylindres. Cependant, tout autre forme géométrique plus ou moins complexe représentant judicieusement l'objet ou la personne d'intérêt suivi pourrait être utilisée, ou aussi des pavés.

La Figure 2 illustre de manière schématique une cartographie d'un espace surveillé pour opérer le dispositif de l'invention. L'espace surveillé est divisé en différentes zones. Dans l'exemple illustré, une zone de compétence (201, 202, 203) est spécifiée. La zone de compétence est associée à une zone d'entrée-sortie (204, 205) de l'espace surveillé et à une ou plusieurs zones de recouvrement (206, 207) correspondant à des entrées-sorties inter-caméras. Toute autre définition des zones, tel que la définition d'une unique zone de compétence recouvrant l'ensemble du corridor permet d'opérer le dispositif de l'invention selon les mêmes principes.

Avantageusement, la définition d'une cartographie permet de limiter les traitements d'images aux zones définies et faciliter la détection d'interactions potentielles entre pistes issues du suivi 3D.

Comme mentionné plus haut, le dispositif de l'invention opère selon des règles de définition d'interaction entre pistes. Le dispositif de propagation des risques permet de créer des parentés entre pistes lorsqu'une interaction entre pistes est avérée. Un certain nombre de critères permettent de définir une "interaction avérée".

Un premier critère est « la proximité ». L'effet perspectif dans une caméra rend l'incertitude autour de la position d'une personne modélisable par une ellipse au sol dont l'axe principal représente l'axe entre la personne et la caméra et l'axe secondaire la largeur de la personne. Dans ce cadre, les données de calibrage permettent de passer d'information dans l'image à des données 3D telles que la localisation au sol, la distance à la caméra, la taille de la personne. Un critère indiquant la proximité entre deux personnes peut être déterminé par la superposition de leurs ellipses respectives. Un seuil de superposition permet de définir l'importance de ce recouvrement pour être pertinent. Il est à noter que d'autres critères peuvent être utilisés pour détecter la proximité.

Un autre critère est « l'occultation ». De manière connue, il est d'usage de modéliser une personne par un cylindre dans le cadre d'un algorithme de suivi, pour disposer d'un modèle simple à exploiter. Ainsi un critère indiquant l'occultation d'une personne par une autre peut être déterminé par la superposition de leurs cylindres du point de vue de la caméra. Un seuil permet de définir l'importance de ce recouvrement pour être pertinent. De nouveau, avantageusement, les informations de calibrage permettent de passer de données 3D à des données 2D. Il est à noter que d'autres critères peuvent être utilisés pour détecter l'occultation.

L'homme du métier comprendra que d'autres paramètres pourraient être utilisés en fonction des besoins et du contexte. Par exemple, la proximité d'apparence. En effet, un système de suivi visuel est sensible à l'apparence. Il est difficile de différencier sans erreur deux personnes habillées de manière similaire ou deux voitures de même couleur ou même modèle.

Un autre paramètre pouvant être utilisé est la « certitude ». En effet, certains systèmes de suivi sont capables de décrire la certitude ou réciproquement l'incertitude de positionnement d'une personne.

Un autre paramètre pouvant être utilisé est la « convergence des trajectoires » pour des situations non figées pour des trajectoires qui se rapprochent, se croisent puis s'éloignent.

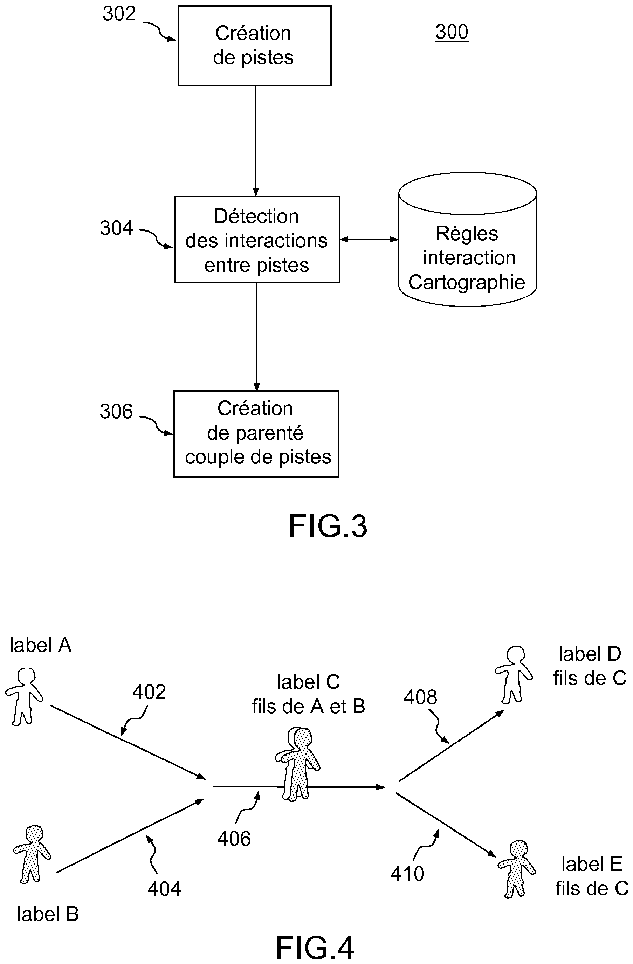

La Figure 3 montre les étapes du processus (300) de propagation des risques selon le principe de l'invention. Comme évoqué précédemment, le propagateur de risques est conçu pour pallier aux faiblesses d'un système de suivi 3D vidéo d'objets d'intérêts, et opère en plusieurs étapes.

L'étape initiale (302) consiste à créer les pistes, c'est-à-dire pour une piste, déterminer les suites de positions dans l'espace et dans le temps d'un objet suivi.

A l'étape suivante (304), le processus détermine les interactions entre les pistes créées à l'étape précédente. De manière avantageuse pour obtenir une réponse fiable et pertinente, le processus agrège temporellement les critères d'interaction qui sont définis préalablement pour déterminer l'existence d'une interaction entre pistes. Dans une implémentation préférentielle, une interaction est déterminée par la présence répétée d'une piste dans l'ellipse de projection au sol d'une autre piste, ceci combiné à un phénomène répété lui aussi d'occultation entre ces mêmes pistes.

Dans cette étape, le processus prend aussi en compte la cartographie qui a été préalablement définie afin d'exclure certaines zones de l'analyse, comme par exemple les zones d'entrées/sorties globales. En effet dans ces zones, le manque de données fiables ne permet pas d'interpréter la scène suffisamment finement pour remonter les informations nécessaires aux règles d'interactions.

Quand une interaction est détectée, le processus passe à l'étape suivante (306) pour activer la création de parenté. La Figure 4 est une illustration du processus de création de liens de parenté.

La création de parenté intervient deux fois. Une première fois au début de l'interaction entre pistes, et une seconde fois à la fin de l'interaction.

La première création de parenté consiste en l'exécution des actions suivantes:
- suppression des deux pistes (402, 404) de l'interaction détectée entre deux personnes ou objets d'intérêt, des labels étant affectés à chaque personne (label A, label B) ;
- création d'une nouvelle piste (406) chargée de suivre les deux personnes indifféremment; et
- incorporation des labels représentant les deux pistes supprimées dans la généalogie de la nouvelle piste (label C, fils de A & B).

La seconde création de parenté intervient à la fin de l'interaction, et consiste en l'exécution des actions suivantes :
- création de deux nouvelles pistes (408, 410) chargées de suivre les deux personnes ou objets d'intérêt ;
- suppression de l'ancienne piste (406) chargée de suivre les deux personnes indifféremment ;
- incorporation du label représentant la piste supprimée (406) dans la généalogie de chacune des deux nouvelles pistes (label D, fils de C) et (label E, fils de C). Les nouvelles positions identifiées par le système de suivi sont associées aux labels résultants (D, E).

Pour résumer certains avantages de la présente invention sont :
- que les systèmes d'assistance à la sécurité sont plus fiables et robustes;
- que la résolution de l'appariement entre pistes et la détection de personnes sont rapides et viables pour le temps réel ;
- qu'une certaine indépendance est créée entre les performances de l'algorithme de suivi de personnes et celles du système global de fusion de données.

L'homme de l'art appréciera que des variations puissent être apportées sur le système et le procédé décrits de manière préférentielle, tout en maintenant les principes de l'invention.

La présente invention peut s'implémenter à partir d'éléments matériel et/ou logiciel. Elle peut être disponible en tant que produit programme d'ordinateur sur un support lisible par ordinateur.

Ainsi la présente description illustre une implémentation préférentielle de l'invention, mais n'est pas limitative. Un exemple a été choisi pour permettre une bonne compréhension des principes de l'invention, et une application concrète, mais il n'est en rien exhaustif et doit permettre à l'homme du métier d'apporter des modifications et variantes d'implémentation en conservant les mêmes principes.

## Revendications

1. Un procédé d'assistance à la sécurité dans le suivi 3D d'objets d'intérêt, le procédé comprenant les étapes suivantes :
- calibrer par rapport à une référence commune un ensemble de détecteurs d'un système de suivi pour un espace à surveiller;
- définir pour l'espace surveillé, au moins une zone de compétence ;
- générer pour la zone de compétence une liste de pistes, chaque piste comprenant pour un objet d'intérêt suivi un label identifiant l'objet d'intérêt suivi et une suite de positions fournies par les détecteurs ;
- détecter des interactions entre les pistes sur la zone de compétence ; et
- créer un label de parenté à partir des labels identifiant chaque objet d'intérêt suivi pour les pistes détectées en interaction.

2. Le procédé selon la revendication 1 dans lequel la zone de compétence est associée à une zone d'entrée-sortie (204, 205) de l'espace surveillé et à une ou plusieurs zones de recouvrement (206, 207).

3. Le procédé selon la revendication 1 ou 2 comprenant de plus une étape de définition des interactions entre pistes.

4. Le procédé selon la revendication 3 dans lequel les interactions entre pistes sont définies par un paramètre de proximité.

5. Le procédé selon la revendication 3 dans lequel les interactions entre pistes sont définies par un paramètre d'occultation.

6. Le procédé selon l'une quelconque des revendications 1 à 5 dans lequel l'étape de détection d'interactions consiste à déterminer la présence répétée d'une piste dans l'ellipse de projection au sol d'une autre piste et l'occultation répétée entre ces mêmes pistes.

7. Le procédé selon l'une quelconque des revendications 1 à 6 dans lequel les détecteurs sont du type capteur radiométrique, détecteur métallique, détecteur de trace d'explosif, détecteur biologique et/ou détecteur épidémiologique.

8. Le procédé selon l'une quelconque des revendications 1 à 7 dans lequel l'étape de création de label de parenté comprend les étapes de :
- supprimer de la liste des pistes, les deux pistes de l'interaction détectée entre deux objets d'intérêt;
- créer une nouvelle piste commune pour le suivi des deux objets d'intérêt en interaction; et
- associer un label d'interaction à la piste commune, le label d'interaction représentant les deux pistes supprimées dans la généalogie de la piste commune.

9. Le procédé selon la revendication 8 dans lequel l'étape de création de label de parenté comprend de plus les étapes de :
- créer à partir de la piste commune, deux nouvelles pistes individuelles pour suivre chacun des deux objets d'intérêt ;
- supprimer la piste commune ; et
- incorporer le label de la piste commune supprimée dans la généalogie de chacune des deux pistes individuelles, les positions des deux objets d'intérêt identifiées par le système de suivi étant associées aux labels résultants.

10. Un dispositif d'assistance à la sécurité dans le suivi d'objets d'intérêt, le dispositif comprenant des moyens pour mettre en oeuvre les étapes du procédé selon l'une quelconque des revendications 1 à 8.

11. Un produit programme d'ordinateur, ledit programme d'ordinateur comprenant des instructions de code permettant d'effectuer tout ou partie des étapes du procédé selon l'une quelconque des revendications 1 à 10, lorsque ledit programme est exécuté sur un ordinateur.

## Patentansprüche

1. Verfahren zur Sicherheitsunterstützung bei der 3D-Verfolgung bestimmter Objekte, wobei das Verfahren folgende Schritte beinhaltet:
- Kalibrieren, in Bezug auf eine gemeinsame Referenz, einer Gruppe von Detektoren eines Verfolgungssystems für einen zu überwachenden Raum;
- Definieren, für den überwachten Raum, von mindestens einer Zuständigkeitszone;
- Erzeugen, für die Zuständigkeitszone, einer Liste von Spuren, wobei jede Spur für ein bestimmtes verfolgtes Objekt ein Label zur Identifizierung des verfolgten bestimmten Objekts und eine Folge von Positionen, die von den Detektoren bereitgestellt werden, beinhaltet;
- Erkennen der Interaktionen zwischen den Spuren in der Zuständigkeitszone; und
- Erzeugen eines Verwandschafts-Labels anhand derjenigen Labels, mit welchen jedes bestimmte, verfolgte Objekt identifiziert wird, für die in Interaktion erkannten Spuren.

2. Verfahren nach Anspruch 1, bei welchem die Zuständigkeitszone mit einer Ein-/Ausgangszone (204, 205) des überwachten Raums und mit einer oder mehreren Überlappungszonen (206, 207) assoziiert ist.

3. Verfahren nach Anspruch 1 oder 2, zudem beinhaltend einen Schritt des Definierens der Interaktionen zwischen Spuren.

4. Verfahren nach Anspruch 3, bei welchem die Interaktionen zwischen Spuren durch ein Näheparameter definiert werden.

5. Verfahren nach Anspruch 3, bei welchem die Interaktionen zwischen Spuren durch ein Verdeckungsparameter definiert werden.

6. Verfahren nach einem der Ansprüche 1 bis 5, bei welchem der Schritt des Erkennens von Interaktionen darin besteht, die wiederholte Präsenz einer Spur in der Projektionsellipse einer anderen Spur am Boden und die wiederholte Verdeckung zwischen diesen Spuren zu bestimmen.

7. Verfahren nach einem der Ansprüche 1 bis 6, bei welchem die Detektoren Detektoren vom Typ radiometrischer Sensor, Metalldetektor, Sprengstoffspurendetektor, biologischer Detektor und/oder epidemiologischer Detektor sind.

8. Verfahren nach einem der Ansprüche 1 bis 7, bei welchem der Schritt des Erzeugens eines Verwandschafts-Labels folgende Schritte beinhaltet:
- Löschen aus der Liste der Spuren der beiden Spuren der erkannten Interaktion zwischen zwei bestimmten Objekten;
- Schaffen einer neuen gemeinsamen Spur zum Verfolgen der beiden in Interaktion befindlichen bestimmten Objekte; und
- Assoziieren eines Interaktions-Labels mit der gemeinsamen Spur, wobei das Interaktions-Label die beiden in der Genealogie der gemeinsamen Spur gelöschten Spuren darstellt.

9. Verfahren nach Anspruch 8, bei welchem der Schritt des Erzeugens eines Verwandschafts-Labels zudem folgende Schritte beinhaltet:
- Schaffen, anhand der gemeinsamen Spur, zweier neuer individueller Spuren zum Verfolgen eines jeden der beiden bestimmten Objekte;
- Löschen der gemeinsamen Spur; und
- Einbinden des Labels der in der Genealogie einer jeden der beiden individuellen Spuren gelöschten gemeinsamen Spur, wobei die Positionen der beiden vom Verfolgungssystem identifizierten bestimmten Objekte mit den resultierenden Labeln assoziiert werden.

10. Verfahren zur Sicherheitsunterstützung bei der 3D-Verfolgung bestimmter Objekte, wobei die Vorrichtung Mittel zum Umsetzen der Schritte des Verfahrens nach einem der Ansprüche 1 bis 8 beinhaltet.

11. Computerprogrammprodukt, wobei das Computerprogramm Code-Befehle beinhaltet, welche es ermöglichen, einen Teil oder alle Schritte des Verfahrens nach einem der Ansprüche 1 bis 10 durchzuführen, wenn das Programm auf einem Computer ausgeführt wird.

## Claims

1. A method for assisting security in the 3D tracking of objects of interest, the method comprising the following steps:
- calibrating with respect to a common reference an assembly of detectors of a tracking system for a space to be monitored;
- defining, for the monitored space, at least one competence zone;
- generating, for the competence zone, a list of tracks, each track comprising, for a tracked object of interest, a label identifying the tracked object of interest and a series of positions provided by the detectors;
- detecting interactions between the tracks over the competence zone; and
- creating a kinship label on the basis of the labels identifying each object of interest tracked for the tracks detected during interaction.

2. The method as claimed in claim 1, in which the competence zone is associated with an entrance-exit zone (204, 205) of the monitored space and with one or more overlap zones (206, 207).

3. The method as claimed in claim 1 or 2, moreover comprising a step of defining the interactions between tracks.

4. The method as claimed in claim 3, in which the interactions between tracks are defined by a proximity parameter.

5. The method as claimed in claim 3, in which the interactions between tracks are defined by a masking parameter.

6. The method as claimed in any one of claims 1 to 5, in which the step of detecting interactions consists in determining the repeated presence of a track in the ground projection ellipse of another track and the repeated masking between these same tracks.

7. The method as claimed in any one of claims 1 to 6, in which the detectors are of the radiometric sensor, metallic detector, explosive trace detector, biological detector and/or epidemiological detector type.

8. The method as claimed in any one of claims 1 to 7, in which the step of kinship label creation comprises the steps of:
- deleting, from the list of tracks, the two tracks of the detected interaction between two objects of interest;
- creating a new common track for the tracking of the two objects of interest during interaction; and
- associating an interaction label with the common track, the interaction label representing the two tracks deleted in the genealogy of the common track.

9. The method as claimed in claim 8, in which the step of kinship label creation moreover comprises the steps of:
- creating, on the basis of the common track, two new individual tracks for tracking each of the two objects of interest;
- deleting the common track; and
- incorporating the label of the deleted common track into the genealogy of each of the two individual tracks, the positions, identified by the tracking system, of the two objects of interest being associated with the resulting labels.

10. A device for assisting security in the tracking of objects of interest, the device comprising means for implementing the steps of the method as claimed in any one of claims 1 to 8.

11. A computer program product, said computer program comprising code instructions making it possible to perform all or some of the steps of the method as claimed in any one of claims 1 to 10, when said program is executed on a computer.
